Europäisches Patentamt

European Patent Office

Office européen des brevets

(11) Publication number: 0 353 797
A1

## EUROPEAN PATENT APPLICATION

(21) Application number: 89201689.0

(22) Date of filing: 27.06.89

(51) Int. Cl.⁴: C08G 18/08 , C08G 18/67 , C08F 299/06

(30) Priority: 30.06.88 NL 8801655

(43) Date of publication of application:
07.02.90 Bulletin 90/06

(84) Designated Contracting States:
AT BE CH DE ES FR GB GR IT LI LU NL SE

(71) Applicant: AKZO N.V.
Velperweg 76
NL-6824 BM Arnhem(NL)

(72) Inventor: Buter, Roelof
Surinkhof 1
NL-6952 HT Dieren(NL)
Inventor: Roelofs, Andreas Henricus
Johannes
Cadier en Keerpad 16
NL-6845 HV Arnhem(NL)

(74) Representative: Sieders, René et al
AKZO N.V. Patent Department (Dept. CO)
P.O. Box 9300
NL-6800 SB Arnhem(NL)

(54) A functionalized polyurethane which can be used to prepare aqueous dispersions of polymer hibrids.

(57) The present invention relates to a composition and to a method of forming the composition, which composition can be used to emulsion polymerize a polymer hybrid comprising polyurethane and polyacrylate. The reaction product of the emulsion polymerization can be used singly or in combination with other materials to form a dryable or curable aqueous dispersion.

EP 0 353 797 A1

# A FUNCTIONALIZED POLYURETHANE WHICH CAN BE USED TO PREPARE AQUEOUS DISPERSIONS OF POLYMER HYBRIDS

## BACKGROUND OF THE INVENTION

### 1. Field of the Invention

The invention relates to a composition and to a method of forming the composition which includes the preparation of a functionalized polyurethane which can be emulsion polymerized to produce a polyurethane-polyacrylate hybrid polymer.

### 2. Background of the Invention

A process for preparation of an aqueous dispersion of a polyurethane-polyacrylate polymer hybrid is known from EP 0 189 945, where a polyurethane prepolymer having isocyanate groups present in combination with (meth)acrylate monomer as a solvent is dispersed in water, followed by the prepolymer being chain extended by condensation and addition polymerization.

A drawback to the aforementioned process is that the (meth)acrylate monomers in which the prepolymer is dissolved must not contain any groups reactive towards the isocyanate groups present in the prepolymer. This would lead to the desired polyurethane build-up being upset and a considerable amount of diacrylate-polyurethane prepolymer being produced. This, in its turn, would lead to crosslinking reactions during the emulsion polymerization, leading to instability as a result of gelling.

Other disadvantages of the above-described process are that the polyurethane prepolymer also reacts with water, so that the dispersion process in water is hard to control. In addition, the number of neutralizing agents that may be used to bring about dispersibility in water is very small as the neutralizing agents must not react with the isocyanate groups of the prepolymer. The present invention eliminates such drawbacks.

## SUMMARY OF THE INVENTION

In accordance with the present invention, a polyurethane functionalized with hydroxyl groups and free carboxyl groups is dissolved in acrylate and methacrylate monomers, after which the resulting solution is used as feed for an emulsion polymerization.

Optimum results are obtained when the polyurethane is present in an amount of 10-70% by weight and the poly(meth)acrylate in an amount of 90-30% by weight, calculated on the total polymer hybrid. Within these limits the polymer hybrids have the advantages of the two polymers of which they are built and the less favourable properties are moderated. Favorable properties of polyurethanes include satisfactory adhesion to many substrates, mechanical resistance and a favorable hardness/flexibility balance. Acrylates are known to have a favorable chemical resistance.

In accordance with the present invention, a polyurethane prepolymer is first prepared by reacting a polyisocyanate with compounds for building in acid groups. Preference is given to in situ preparation of the prepolymer in acrylate or methacrylate monomers, the most favourable results being obtained by preparing a prepolymer having residual terminal isocyanate groups, which then is converted with one or more polyols into a polyurethane. Suitable polyisocyanates for preparing the polyurethane prepolymer may be aliphatic, cycloaliphatic, or aromatic by nature. Use is preferably made of diisocyanates, although polyisocyanates of a higher functionality may also be used in such a combination with diisocyanates and/or monoisocyanates as will give an average functionality of two.

The polyurethane prepolymer may contain ethylenic unsaturation, or a small amount of vinyl monomer having a group capable of reacting with an isocyanate group may be added during the preparation of the polyurethane. The advantage of this is that during subsequent emulsion polymerization instead of physical mixture of polyurethane and polyacrylate, a graft polymer is obtained which is capable of providing a highly stable aqueous dispersion.

Another preferred embodiment is one in which the polyurethane prepolymer is the reaction product of isophorone diisocyanate and dimethylol propionic acid. Use of these particular reactants provides coating compositions which, because of the unequal reactivity of the two isocyanate groups of isophorone diisocyanate, give a far more homogeneous molecular weight distribution of a prepolymer having terminal isocyanate groups.

The polyurethane prepolymer with acid groups attached is subsequently functionalized by reacting it with a suitable polyol to prepare a functionalized polyurethane.

Suitable polyols for preparing the funtionalized polyurethane include polyethers and/or polyesters of an average molecular weight of about 200-6000, an OH number of about 20-600 mg KOH/g, and an acid number below 10 mg KOH/g.

It is preferred that said polyols have an average hydroxy functionality of about two, since polyols having a higher funtionality give rise to crosslinking. The number average molecular weight (Mn) of the functionalized polyurethane of the present invention ranges from about 1500 to about 10000, with weight average molecular weight (Mw) being such that the polydispersity index (PDI) ranges from about 1,5 to about 3,0. A PDI ranging from about 1,5 to about 2,5 is preferred.

Once the functionalized polyurethane polymer is prepared, additional methacrylate and acrylate monomers can be added to the polymer solution, wherein the additional monomers comprise functional groups, such as hydroxyl groups, capable of reacting with isocyanate groups. At this time there is no danger of reaction between the functionalized methacrylates and acrylates and the functionalized polyurethane, since isocyanate groups are no longer present on the functionalized polyurethane molecule.

When there is an unsaturation built into the polyurethane, the methacrylate and acrylate monomers present as solvent can be reacted with the polyurethane to provide formation of a graft or block polymer of polyurethane-polyacrylate, which typically improves compatibility of the final hybrid polymer aqueous dispersion, including the various molecular species formed. This improved compatibility enables formation of a clearer cured/dried film from the final aqueous dispersion. This is particularly true when the film is cured/dried using temperatures greater than room temperature.

An aqueous dispersion of the present invention, comprising a polyurethane functionalized with hydroxyl groups and free carboxyl groups, dissolved in methacrylate and/or acrylate monomers (which may include hydroxyl functionalized methacrylate and/or acrylate monomer), can then be used as a feed for emulsion polymerization.

It is preferred that the free acid (carboxyl) groups present in the functionalized polyurethane should be at least partially neutralized. As a result, dispersibility in water of the polyurethane is improved.

Thus, the invention comprises a method of preparing a composition which can be used to emulsion polymerize a polymer hybrid which can be a polymer mixture, a graft or block copolymer, or combinations thereof. The polymer hybrid comprises polyurethane and polyacrylate, and can be used in an aqueous dispersion. The method of preparing the composition comprises the steps of:

(a) preparing a prepolymer by reacting an excess of polyisocyanate with an organic compound having at least one hydroxyl group and at least one acid group;

(b) reacting the prepolymer of step (a) with a polyol to form a functionalized polyurethane; and

(c) providing sufficient acrylate and/or methacrylate monomer as a solvent that a composition results wherein said functionalized polyurethane of step (b) makes up from about 10% by weight to about 70% by weight of the combination of functionalized polyurethane and acrylate and/or methacrylate monomer.

The invention also comprises a composition for use in the emulsion polymerization of a polymer hybrid comprising polyurethane and polyacrylate, the composition comprising:

(a) the reaction product of:

(i) a prepolymer prepared by reacting an excess of polyisocyanate with an organic compound having at least one hydroxyl group and at least one acid group; with

(ii) a polyol; and

(b) an acrylate monomer, a methacrylate monomer or mixtures thereof, wherein (a) ranges from about 10% by weight to about 70% by weight of the combination of (a) and (b).

## DETAILED DESCRIPTION OF THE PREFERRED EMBODIMENTS

The solution (composition) of the present invention, which comprises a functionalized polyurethane in an acrylate and/or methacrylate monomer is preferably obtained in two steps. In the first step, an organic compound having at least one and preferably two hydroxyl groups and at least one acid group, preferably a carboxylic acid group, is reacted with an excess of polyisocyanate to form a prepolymer having residual

EP 0 353 797 A1

isocyanate end groups and at least one acid group. The reaction is preferably carried out using an acrylate and/or methacrylate monomer as solvent.

In the second step the resulting prepolymer is reacted with a polyol to form a functionalized polyurethane, the reaction also preferably being carried out using an acrylate and/or methacrylate monomer as solvent. The reaction product comprises a 10-70% by weight-functionalized polyurethane in solution. After formation of the functionalized polyurethane, the acid groups built into the polyurethane are neutralized at least in part. The resulting polyurethane solution in an acrylate and/or methacrylate momoner can used directly as feed in an emulsion polymerization process, or can be combined with additional reactants such as functionalized acrylate or methacrylate monomer prior to the emulsion polymerization process.

In the first as well as in the second step of the polyurethane preparation use may optionally be made of a small amount of a hydrophilic solvent, such as N-methyl pyrrolidone, diethylene glycol dimethyl ether, or dipropylene glycol dimethyl ether.

Suitable polyisocyanates for preparing the polyurethane prepolymer can be aliphatic, cycloaliphatic, or aromatic by nature. Use is preferably made of diisocyanates, although polyisocyanates of a higher functionality may also be used in such a combination with diisocyanates and/or monoisocyanates as will give an average functionality of two.

Examples of suitable compounds for building in acid groups include: dimethylol propionic acid, hydroxyethyl propionic acid, dihydroxymaleic acid, dihydroxytartaric acid, 2,6-dihydroxybenzoic acid, glycolic acid, glycine, 2-hydroxyethane sulphonic acid. A suitable equivalent ratio of OH:NCO is 1:2 to 1:5.

As examples of suitable polyols include polyether diols, such as: polyethylene oxide diols, polyethylene oxide propylene oxide diols, and polytetramethylene oxide diols.

Examples of other suitable polyols include polyesters such as those that may be prepared from aliphatic, cycloaliphatic, or aromatic dicarboxylic acids and/or anhydrides and aliphatic, cycloaliphatic, or araliphatic diols. Examples of suitable cycloaliphatic or aromatic dicarboxylic acids or derivatives thereof include tetrahydrophthalic acid, tetrahydrophthalic anhydride, endomethylene tetrahydrophthalic acid, hexachlororendomethylene tetrahydrophthalic acid, hexahydrophthalic acid, hexahydroterephthalic acid, phthalic acid, p-carboxymethyl benzoic acid, dichlorophthalic acid, tetrachlorophthalic acid, dimethyl terephthalate, isophthalic acid, terephthalic acid, dimethyl hexahydroterephthalate, naphthalene-2,6-diarboxylic acid, and diphenyl-ortho, ortho-dicarboxylic acid. Examples of suitable aliphatic dicarboxylic acids or derivatives thereof include: maleic acid, maleic anhydride, diethyl maleate, itaconic acid, glutaric acid, fumaric acid, adipic acid, azelaic acid, and dimerized fatty acids. Examples of suitable diols for preparing polyester include: aliphatic diols, such as ethylene glycol, propane diol-1, propane diol-1,3, neopentyl glycol, butane diol, hexane diol, octane diol, and compounds capable of reacting as divalent alcohols, such as ethylene oxide, propylene oxide, glycidyl ester of pivalic acid or of 1,1-dimethyl heptane carboxylic acid-1, neopentyl glycol ester of hydroxy pivalic acid, cycloaliphatic diols, such as 1,4-cyclohexane diol, 2,di(4,4'-dihydroxycyclohexyl)-propane, 1,4-dimethyl cyclohexane, araliphatic diols, such as bis(ethoxylated) Bisphenol A and bis(propoxylated) Bisphenol A.

The polyesters may contain small amounts of the diols from which they were prepared. For polyurethanes to be dried by oxidation, particular amounts of unsaturated fatty acids can be built into the polyester.

In preparing the polyurethane the first and second steps are both carried out in a dry atmosphere at a temperature of 50°-130° C, preferably 75°-95° C. Optionally, use can be made of a catalyst, such as an amine or an organometallic compound, in a conventional amount of 0.01-0.1% by weight. Also, a stabilizer or inhibitor may be used to prevent polymerization of the acrylate and/or methacrylate monomers used as solvent for the polyurethane, such as hydroquinone, hydroquinone monomethyl ether or nitrobenzene, in conventional amounts of 50-1000 ppm.

Optionally, use may be made in the first and/or in the second step of the polyurethane preparation of a small amount of a polymerizable vinyl monomer with at least one H atom reactive towards an isocyanate group, thus providing the polyurethane with polymerizable vinyl groups. The ratio of the OH or NH groups from the polymerizable vinyl monomer to the NCO groups from the polyisocyanate, i.e. the OH:NCO or NH:NCO ratio, ranges from about 0 to about 0,25.

The polyurethane having been prepared, a 10-70% by weight-polyurethane solution is obtained of which the solvent consists primarily of an acrylate and/or methacrylate monomer. To this may optionally be added functional monomers for the emulsion polymerization which could not previously be added because they would upset the polyurethane synthesis. To the solution is added a neutralizing agent to neutralize wholly or in part the acid groups built into the polyurethane. Examples of suitable neutralizing agents which form salts with the acid groups include: inorganic and organic bases and tertiary amines.

Alternative neutralizing agents which perform well include polymerizable vinyl monomers which also

4

contain an amino group. A suitable degree of neutralization is 50-130% on equivalent basis.

Suitable acrylate and/or methacrylate monomers which can be used as solvents in the polyurethane preparation include:

(cyclo)aliphatic (meth)acrylates, alkoxy(meth)acrylates, and the like. Also, use may be made of small amounts of up to about 20% by weight of different (co)polmerizable unsaturated monomers, such as monovinyl aromatic hydrocarbons and/or polyfunctional vinyl monomers.

The solution of the polyurethane in the acrylate and/or methacrylate monomer can be used as feed in an emulsion polymerization process. The emulsion polymerization method used is a method known in itself, in which emulsion polymerization is generally carried out under atmospheric pressure at a temperature of $40^\circ$-$100^\circ$ C, preferably $60^\circ$-$90^\circ$ C, in an atmosphere of preferably an inert gas, such as nitrogen. Optionally, however, emulsion polymerization may also be carried out under elevated pressure at a temperature of $40^\circ$-$100^\circ$ C or higher.

During the emulsion polymerization process the polyurethane-acrylate/methacrylate solution may be provided in the aqueous phase with an emulsifier which is preferably added discontinuously. It is preferred to add to the polyurethane-acrylate/methacrylate solution part of the emulsifier used in the emulsion polymerization. Optionally, a small part of the polyurethane-(meth)acrylate solution, for instance 1% by weight, may previously be provided in the aqueous phase together with parts of both the emulsifier and the initiator, whereupon after a particular reaction period the remainder of the polyurethane-(meth)acrylate solution and the initiator (solution) are added steadily over a particular period. In such a case the process is referred to a seeded emulsion polymerization.

In emulsion polymerization use is preferably made of emulsifiers which are of an anionic or non-ionic nature. As examples of anionic emulsifiers include: potassium laurate, potassium stearate, potassium oleate, sodium decyl sulphate, sodium dodecyl sulphate, and sodium rosinate. Examples of non-ionic emulsifiers include: linear and branched alkyl ethers and alkyl aryl polyethylene glycol ethers and polypropylene glycol ethers and thioethers, alkyl phenoxypoly(ethyleneoxy) ethanols, such as the adduct of 1 mole of nonyl phenol to 5-12 moles of ethylene oxide, or the ammonium salt of the sulphate of such an adduct. A conventional amount of emulsifier is 0.1-5% by weight (calculated on the monomer).

Alternatively, use may be made in emulsion polymerization of the usual radical initiator in the conventional amounts. Optionally, use may also be made of a chain length regulator, such as n-octyl mercaptan, dodecyl mercaptan, and 3-mercaptopropionic acid.

Use of the solution (composition) of the present invention in an emulsion polymerization results in the in situ formation of a dispersion of a polymer hybrid comprising a polyurethane-polyacrylate during the emulsion polymerization. Surprisingly, the polymer dispersions obtained are very stable.

The dispersed polymer particles can be composed of a physical mixture of a polyacrylate and a polyurethane. When the polyurethane contains polymerizable vinyl groups, however, the polyacrylate and the polyurethane can be chemically bonded wholly or in part, so that the dispersed polymer particles are composed wholly or in part of block and graft copolymers of polyurethane-polyacrylate.

The polymer hybrid dispersion typically has a solids content of about 25-55% by weight, preferably of about 35-45% by weight. Formation of coatings obtained from the dispersions can be carried out by drying by evaporation of solvents only; particularly when use is made of polyurethane containing unsaturated fatty acids. The coating can then be formed by air-drying the dispersion with the aid of so-called driers. There are metal salts that are employed also for drying in the known alkyd resins on the basis of unsaturated oils and/or unsaturated fatty acids. To improve pot stability, an anti-skinning agent may be included in the dispersions. Examples of anti-skinning agents include oximes, such as butyraldehyde oxime and ethyl methyl ketoxime. Generally favorable results are obtained when the driers and anti-skinning agents are used in an amount of about 0,01-1% by weight, calculated on the weight of the film forming constituents.

Alternatively, the films resulting from the dispersions of the present invention may be cured and dried in a completely different manner without the use of a drier. This is the case when the dispersed particles contain hydroxyl groups. A curing compound reacting with hydroxyl groups must be added then, and typically heat is applied.

The hydroxyl groups in the dispersed particles may be from the polyurethane or from the polyacrylate. The latter is the case when use is made in the emulsion polymerization of hydroxyalkyl (meth)acrylate added after the preparation of the functionalized polyurethane.

The compounds reacting with hydroxyl groups are as a rule N-methylol-and/or N-methylol ether-containing aminoplasts. Especially favorable results can be obtained using a methylol melamine having 4-6 methylol groups per molecule of melamine, with at least 3 methylol groups being etherified with butanol or a butanol etherified-condensation product of formaldehyde and N,N'-ethylene diurea. Other suitable curing agents include water-dispersable, blocked polyisocyanates, such as a methyl ethyl ketoxime blocked; and isocyanate group-containing adducts of a polyisocyanate and a hydroxycarboxylic acid, for instance dimethylol propionic acid.

The curing agents reacting with hydroxyl groups are generally used in such an amount that the molar ratio of the hydroxyl groups of the dispersion to the reactive groups of the curing agent is in the range of about 0,7 to 1,5.

The invention also relates to the use of the above-described dispersions in coating wood, synthetic materials, and metal. Into these dispersions may be incorporated the conventional adjuvants and additives, such as pigments, dispersing agents dyes, solvents, and accelerator for the curing reaction.

The aqueous dispersions of the addition polymer according to the present invention are also suited to be used in applying coating compositons of a high gloss metallic appearance (the so-called base coat/clear coat system). To this end the aqueous dispersions according to the invention are used in the base coat in combination with so-called non-leafing aluminium paste or other metallic pigments.

In combination with a base coat based on the dispersion according to the invention, the clear coat used may for instance be a clear baking lacquer of a conventional acrylate/melamine composition. This system is generally cured in a baking oven for 20-30 minutes at a temperature of 80° - 120° C.

The water-dilutable dispersions according to the invention can be used as such or in combination with water-dilutable polyesters or polyurethanes, such as alkyl resins.

The invention will now be further described in the following examples. In these, the measured Mn and Mw of the functionalized polyurethane was measured using GPC. The mean particle size of the dispersions was determined by dynamic lights scattering, the dispersion being diluted with water to a solids content of about 0,1% by weight. The viscosity was determined with a Brookfield viscometer. The solids content was determined in accordance with ASTM method 1644-59 with heating at 130° C over a period of 30 minutes.

The testing methods referred to in the examples below were all carried out in accordance with French industrial standard NF T30-016 and the results are expressed in seconds. An acceptable minimum for automotive paint is about 180 seconds.

The flexibility of the coating was determined with a ball impact tester in accordance with ASTM D 2794-69, using a ball weight of 0,908 kg, a ball diameter of 15,9 mm, and an aperture of 16,3 mm, the result being expressed in kg.cm. This method was used to determine the values for both the coated side and the back of the steel panel. An acceptable minimum flexibility is about 35 kg.cm, the maximum measurable weight value being 85 kg.cm. Additionally, the Erichsen indentation test was carried out, the results being expressed in mm; a test value higher than 6 being indicative of a flexible coat and a value of 2 of a brittle coat.

The gloss of the coating was determined in accordance with U.S. industrial standard ASTM D-523 at 60° C and 20° C. A gloss value on a steel substrate of above 80 at 60° C is high.

EXAMPLES

Example 1

A) Preparation of polyurethane

Step I

Into a $\frac{1}{2}$-liter reaction flask fitted with a stirrer, a reflux condenser, and a thermometer were weighed the following ingredients:

| dimethylol propionic acid | 22,00 g |
|---|---|
| isophorone diisocyanate | 91,25 g |
| 2-hydroxyethyl methacrylate | 6,10 g |
| methyl methacrylate | 156,75 g |
| diethylene glycol methyl ether | 16,50 g |
| hydroquinone | 48 mg |
| dibutyl tin acetate | 250 mg |

The contents of the reaction flask were kept at 85° C for one hour under an atmosphere of dry air.

Step II

Into a 1-liter reaction flask fitted with a stirrer, a reflux condenser, a thermometer, and a dropping funnel were weighed the following ingredients:

| neopentyl glycol-pripol (OH number = 150, acid number = 0,5) | 159,50 g |
|---|---|
| polypropylene glycol (Mw = 600) | 32,0 g |
| butyl acrylate | 105,0 g |
| methyl methacrylate | 37,5 g |
| diethylene glycol dimethyl ether | 45,0 g |
| hydroquinone | 43 mg |
| dibutyl tin acetate | 400 mg |

The neopentyl glycol-pripol polyester was prepared from neopentyl glycol and a dimerized fatty acid (available under the trademark Pripol 1013® ex Unichema) and had an OH number of 150 and an acid number of 0,5 mg KOH/g. This polyester will be referred to hereinafter as neopentyl glycol-pripol

The dropping funnel was filled with 266,0 g of the reaction mixture from Step I. The contents of the reaction flask were heated to 85° C under an atmosphere of dry air, after which the contents of the dropping funnel were added to those of the reaction flask over a period of 1 hour. The contents of the reaction flask were then kept at 85° C for 4 hours. The functionalized polyurethane prepared by the above reactions had a calculated $M_n$ of about 3500.

After cooling the above reaction product, the following ingredients were introduced into the reaction flask:

| 2-hydroxyethyl methacrylate | 15,0 g |
|---|---|
| N,N-dimethyl ethanolamine | 13,3 g |
| emulsifier (30%) | 3,5 g |

and the contents of the reaction flask were homogeneously mixed.

The emulsifier used was a 30% by weight solution in water of the ammonium sulphate of the reaction product of one mole of nonyl phenol with nine moles of ethylene oxide (available under the trademark Fenopon EP-110 ex GAF).

B) Emulsion polymerization

Into a 2-liter reaction flask fitter with a stirrer, a thermometer, a reflux condenser, and 2 dropping funnels A and B were weighed and homogeneously mixed the following ingredients:

| demineralized water | 672,3 g |
| reaction mixture from Example 1A | 6,3 g |
| emulsifier (30%) | 1,4 g |

Dropping funnel A was filled with 625,4 g of the reaction mixture from Example 1A and dropping funnel B was filled with a homogeneous mixture of:

| demineralized water | 100,0 g |
| and ammonium persulphate | 1,4 g |

The contents of both the reaction flask and the dropping funnels were brought under a nitrogen atmosphere and the contents of the reaction flask were heated to 85° C.

Next, 25% of the contents of dropping funnel B were fed into the reaction flask over a period of 2 minutes. After the temperature of the reaction flask had been kept at 85° C for 30 minutes, the contents of dropping funnel A and 70% of the original contents of dropping funnel B were fed into the reaction flask at a constant rate over a period of 3 hours, after which the contents of the reaction flask were kept at 85° C for 30 minutes. Next, the remainder of the contents of dropping. funnel B were fed into the reaction flask in 2 minutes, whereupon the contents of the reaction flask were kept at 85° C for a further 1 hour.

Obtained was a stable aqueous polymer dispersion, the properties of which are given in Table I.

Example 2

A) Preparation of polyurethane

Step I

Step I of Example 1A was repeated, except that use was made of the following ingredients and amounts:

| dimethylol propionic acid | 22,0 g |
| isophorone diisocyanate | 91,25 g |
| 2-hydroxyethyl methacrylate | 6,10 g |
| methyl methacrylate | 162,25 g |
| diethylene glycol dimethyl ether | 11,0 g |
| hydroquinone | 50 mg |
| dibutyl tin acetate | 250 mg |

Step II

Step II of Example 1A was repeated, except that use was made of the following ingredients and amounts.
Weighed into the reaction flask were:

8

| neopentyl glycol-pripol (OH number = 150, acid number = 0,5) | 159,5 g |
|---|---|
| polypropylene glycol (Mw = 600) | 32,0 g |
| butyl acrylate | 95,0 g |
| methyl methacrylate | 42,5 g |
| diethylene glycol dimethyl ether | 50,0 g |
| hydroquinone | 42 mg |
| dibutyl tin diacetate | 400 mg |

The dropping funnel was filled with 266,0 g of the reaction mixture from Step I, which was reacted with the contents of the reaction flask. The reaction product was a functionalized polyurethane calculated to have an Mn of about 3500.

B) Emulsion polymerization

Example 1B was repeated, except that use was made of the reaction mixture from Example 2A instead of the reaction mixture from Example 1A. Obtained was a stable aqueous polymer dispersion, the properties of which are given in Table 1.

Example 3

A) Preparation of polyurethane

Step I

Step I of Example 2A was repeated.

Step II

Step II of Example 2A was repeated, except that use was made of the following ingredients and amounts.
Weighed into the reaction flask were:

| neopentyl glycol-pripol (OH number = 150, acid number = 0,5) | 159,5 g |
|---|---|
| polypropylene glycol (Mw = 600) | 32,0 g |
| butyl acrylate | 85,0 g |
| methyl methacrylate | 52,5 g |
| diethylene glycol dimethyl ether | 50,0 g |
| hydroquinone | 42 mg |
| dibutyl tin diacetate | 400 mg |

The functionalized polyurethane reaction product was calculated to have an Mn of about 3500.

B) Emulsion polymerization

Example 1B was repeated, except that use was made of the following ingredients and amounts. In the reaction flask were homogeneously mixed:

| demineralized water | 671,6 g |
|---|---|
| monomer mixture A | 5,6 g |
| emulsifier (30%) | 1,4 g |

Monomer mixture A was composed of:

| 5 % | by weight of 2-hydroxethyl methacrylate |
|---|---|
| 47,5% | by weight of butyl acrylate |
| 47,5% | by weight of methyl methacrylate |

Dropping funnel A was filled with 624,4 g of the reaction mixture from Example 3A, dropping funnel B with a homogeneous mixture of:

| demineralized water | 100,0 g |
|---|---|
| and ammonium persulphate | 1,4 g |

Obtained was a stable aqueous polymer dispersion, the properties of which are given in Table I.

## Example 4

### A) Preparation of polyurethane

#### Step I

Step I of Example 1A was repeated, except that use was made of the following ingredients and amounts:

| dimethylol propionic acid | 27,30 g |
|---|---|
| isophorone diisocyanate | 106,25 g |
| 2-hydroxyethyl methacrylate | 7,15 g |
| methyl methacrylate | 159,0 g |
| hydroquinone | 47 mg |
| dibutyl tin diacetate | 250 mg |

#### Step II

Step II of Example 1A was repeated, except that use was made of the following ingredients and amounts.
Weighed into the raction flask were:

| neopentyl glycol-pripol (OH number = 159, acid number < 1) | 140,2 g |
|---|---|
| neopentyl glycol (iso)phthalate (OH number = 310, acid number <1) | 36,2 g |
| butyl acrylate | 144,6 g |
| hydroquinone | 43 mg |
| dibutyl tin diacetate | 400 mg |

Neopentyl glycol (iso)phthalate polyester was prepared from neopentyl glycol phthalic anhydride, and isophthalic acid, with an OH number of 310 and an acid number of < 1 mg KOH/g. This polyester will be referred to hereinafter as neopentyl glycol (iso)phthalate.

The dropping-funnel was filled with 272,5 g of the reaction mixture from Step I, which was reacted with the contents of the reaction flask. The reaction product was a functionalized polyurethane calculated to have an Mn of about 3000.

On conclusion of the above reaction the following ingredients were fed into the reaction flask:

| 2-hydroxyethyl methacryalte | 15,2 g |
|---|---|
| N,N-dimethyl ethanolamine | 16,5 g |
| emulsifier (30%) | 3,55 g |

## B) Emulsion polymerization

Example 1B was repeated, except that use was made of the following ingredients and amounts. In the reaction flask were homogeneously mixed:

| demineralized water | 725,8 g |
|---|---|
| reaction mixture from Example 4A | 5,8 g |
| emulsifier (30%) | 1,4 g |

Dropping funnel A was filled with 572,6 g of the reaction mixture from Example 4A and dropping funnel B with a homogeneous mixture of:

| demineralized water | 100,0 g |
|---|---|
| and ammonium persulphate | 1,4 g |

Obtained was a stable aqueous polymer dispersion, the properties of which are given in Table I.

## Example 5

### A) Preparation of polyurethane

#### Step I

Step I of Example 1A was repeated, except that use was made of the following ingredients and amounts:

| dimethylol propionic acid | 31,70 g |
|---|---|
| isophorone diisocyanate | 109,90 g |
| 2-hydroxyethyl methacrylate | 7,15 g |
| methyl methacrylate | 158,20 g |
| hydroquinone | 47,5 mg |
| dibutyl tin diacetate | 250 mg |

Step II

Step II of Example 1A was repeated, except that use was made of the following ingredients and amounts:
Weighed into the reaction flask were:

| neopentyl glycol-pripol | 133,2 g |
|---|---|
| neopentyl glycol (iso)phthalate | 34,4 g |
| butyl acrylate | 143,85 g |
| hydroquinone | 43 mg |
| dibutyl tin diacetate | 400 mg |

The dropping funnel was filled with 279,0 g of the reaction mixture from Step I, which was reacted with the contents of the reaction flask. The calculated $M_n$ of the functionalized polyurethane reaction product obtained after Steps I and II was about 3000.

On conclusion of the Step II reaction, the following ingredients were fed into the reaction flask:

| 2-hydroxyethyl methacrylate | 15,15 g |
|---|---|
| N,N-dimethyl ethanolamine | 19,15 g |
| emulsifier (30%) | 3,55 g |

B) Emulsion polymerization

Example 1B was repeated, except that use was made of the following ingredients and amounts.
In the reaction flask are homogeneously mixed:

| demineralized water | 723,2 g |
|---|---|
| reaction mixture from Example 5A | 5,8 g |
| emulsifier (30%) | 1,4 g |

Dropping funnel A was filled with 575,1 g of the reaction mixture from Example 5A and dropping funnel B with a homogeneous mixture of:

| demineralized water | 100,0 g |
|---|---|
| and ammonium persulphate | 1,4 g |

12

Obtained was a stable aqueous polymer dispersion, the properties of which are given in Table I.

Example 6

A) Preparation of polyurethane

Step I

Step I of Example 1A was repeated, except that use was made of the following ingredients and amounts:

| dimethylol propionic acid | 31,70 g |
|---|---|
| isophorone diisocyanate | 109,90 g |
| 2-hydroxyethyl methacrylate | 7,15 g |
| methyl methacrylate | 158,20 g |
| diethylene glycol diemthyl ether | 16,15 mg |
| hydroquinone | 47,5 mg |
| dibutyl tin diacetate | 250 mg |

Step II

Step II of Example 1A was repeated, except that use was made of the following ingredients and amounts.
Weighed into the reaction flask were:

| neopentyl glycol-pripol | 133,2 g |
|---|---|
| neopentyl glycol (iso)phthalate | 34,4 g |
| butyl acrylate | 143,85 g |
| diethylene glycol dimethyl ether | 52,60 g |
| hydroquinone | 43 mg |
| dibutyl tin diacetate | 400 mg |

The dropping funnel was filled with 293,7 g of the reaction mixture from Step I, which was reacted with the contents of the reaction flask. The calculated Mn of the functionalized polyurethane reaction product obtained after Steps I and II was about 3000.
On conclusion of the above reaction, the same ingredients as used in Example 5A were fed into the reaction flask in identical amounts.

B) Emulsion polymerization

Example 1B was repeated, except that use was made of the following ingredients and amounts.
In the reaction flask were homogeneously mixed:

| demineralized water | 661,0 g |
|---|---|
| reaction mixture from Example 6A | 6,45 g |
| emulsifier (30%) | 1,4 g |

Dropping funnel A was filled with 636,7 g of the reaction mixture from Example 6A and dropping funnel B with a homogeneous mixture of:

| demineralized water | 100,0 g |
|---|---|
| and ammonium persulphate | 1,4 g |

Obtained was a stable aqueous polymer dispersion, the properties of which are given in Table I.

Example 7

A) Polyurethane solution

Into a 500-ml 3-necked flask fitted with a stirrer the following ingredients were successively introduced and homogeneously mixed:

| reaction mixture from Example 6A | 270,0 g |
|---|---|
| emulsifier (30%) | 1,70 g |
| diethylene glycol dimethyl ether | 11,20 g |
| methyl methacrylate | 47,95 g |
| butyl acrylate | 47,95 g |
| 2-hydroxyethyl methacylate | 5,05 g |

The calculated Mn of the functionalized polyurethane reaction product obtained after the Steps A) reaction was about 3000.

B) Emulsion polymerization

Example 3B was repeated, except that use was made of the following ingredients and amounts.
In the reaction flask were homogeneously mixed:

| demineralized water | 246,7 g |
|---|---|
| monomer mixture A (see Ex. 3B) | 3,4 g |
| emulsifier (30%) | 0,85 g |

Dropping funnel A was filled with 360,0 g of the reaction mixture from Eample 7A and dropping funnel B with a homogeneous mixture of:

| demineralized water | 100,0 g |
|---|---|
| and ammonium persulphate | 1,05 g |

Obtained was a stable aqueous polymer dispersion, the properties of which are given in Table I.

Example 8

A) Preparation of polyurethane

Step I

Step I of Example 1A was repeated, except that use was made of the following ingredients and amounts:

| dimethyl propionic acid | 31,55 g |
|---|---|
| isophorone diisocyanate | 100,40 g |
| methyl methacrylate | 158,65 g |
| diethylene glycol dimethyl ether | 14,85 g |
| hydroquinone | 47,6 mg |
| dibutyl tin diacetate | 250 mg |

Step II

Step II of Example 1A was repeated, except that use was made of the following ingredients and amounts.
Weighed into the reaction flask were:

| neopentyl glycol-pripol | 147,9 g |
|---|---|
| neopentyl glycol (iso)phthalate | 35,85 g |
| butyl acrylate | 144,20 g |
| diethylene glycol dimethyl ether | 54,0 g |
| hydroquinone | 43,3 mg |
| dibutyl tin diacetate | 400 mg |

The dropping funnel was filled with 277,7 g of the reaction mixture from Step I, which was reacted with the contents of the reaction flask. The calculated Mn of the functionalized polyurethane reaction product after Steps I and II was about 3000.

On conclusion of the above reaction, the following ingredients were fed into the reaction flask:

| 2-hydroxyethyl methacrylate | 15,20 g |
|---|---|
| N,N-dimethyl ethanolamine | 19,05 g |
| emulsifier (30%) | 3,65 g |

B) Emulsion polymerization

Example 1B was repeated, except that use was made of the following ingredients and amounts.
In the reaction flask were homogeneously mixed:

| demineralized water | 661,9 g |
|---|---|
| monomer mixture A (see Ex. 3) | 5,6 g |
| emulsifier (30%) | 1,4 g |

Dropping funnel A was filled with 636,7 g of the reaction mixture from Example 8A and dropping funnel B with a homogeneous mixture of 100,0 g of demineralized water and 1,4 g of ammonium persulphate. The contents of dropping funnel A were stirred during feeding.

Obtained was a stable aqueous polymer dispersion, the properties of which are given in Table I.

Example 9

A pigmented coating composition was prepared from the aqueous polymer dispersio of Example I by homogeneously mixing the following ingredients:

| | |
|---|---|
| titanium dioxide | 25,0 g |
| dispersion from Example 1 | 53,15 g |
| melamine resin I (90%) (see Ex. 9) (available under the trademark) Cymel 327 from Cyanamid) | 4,15 g |
| butoxyethanol | 2,5 g |
| demineralized water | 3,0 g |
| pigment dispersing agent (available under the trademark Disperbyk from Byk-Mellinckrodt) | 0,5 g |

The resulting aqueous coating composition had a solids content of 56,9% by weight and was applied to a steel panel treated with zinc phosphate, and cured in a baking oven for 20 minutes at a temperature of 140°C. The properties of the coating obtained are given in Table II.

Example 10

A pigmented coating composition was prepared from the aqueous polymer dispersion of Example I by homogeneously mixing the following ingredients:

| | |
|---|---|
| titanium dioxide | 25,0 g |
| dispersion from Example I | 46,9 g |
| melamine resin I (90%) (see Ex. 9) | 4,15 g |
| melamine resin II (available under the trademark Maprenal MF-900 from Hoechst) | 2,5 g |
| butoxyethanol | 2,5 g |
| demineralized water | 3,0 g |
| pigment dispersing agent | 0,5 g |

(see Ex. 9) The resulting coating composition had a solids content of 59,4% by weight and was applied to a steel panel and cured in a baking oven for 30 minutes at a temperature of 140°C.

The properties of the coating obtained are given in Table II.

Example 11

Example 9 was repeated, except that use was made of the aqueous polymer dispersion from Example 2 instead of the one from Example 1. The properties of the coating obtained are given in Table II.

Example 12

Example 10 was repeated, except that use was made of the aqueous polymer dispersion from Example 2 instead of the one from Example 1. The properties of the coating obtained are given in Table II.

Example 13

Example 10 was repeated, except that use was made of the aqueous polymer dispersion from Example 3 instead of the one from Example 1. The properties of the coating obtained are given in Table II.

Example 14

A clear (unpigmented) coating composition was prepared from the aqueous polymer dispersion of Example 4 by homogeneously mixing the following ingredients:

| | |
|---|---|
| dispersion from Example 4 | 62,5 g |
| melamine resin I (90%) (see Ex. 9) | 9,3 g |
| butoxyethanol | 7,9 g |
| dimineralized water | 9,0 g |

The resulting aqueous coating composition had a solids content of 37,6% by weight and was applied to a steel panel and cured in a baking oven for 20 minutes at a temperature of 130°C.
The propreties of the coating obtained are given in Table II.

Example 15

Example 14 was repeated, except that use was made of the following ingredients and amounts:

| | |
|---|---|
| dispersion from Example 5 | 62,5 g |
| melamine resin I (90%) (see Ex. 9) | 5,6 g |
| butoxyethanol | 8,6 g |
| demineralized water | 15,0 g |

The resulting aqueous coating composition has a solids content 32,6% by weight and is applied and cured in the same way as in Example 14. The properties of the coating obtained are given in Table II.

Example 16

Example 14 was repeated, except that use was made of the following ingredients and amounts:

| | |
|---|---|
| dispersion from Example 6 | 62,5 g |
| melamine resin I (90%) (see Ex. 9) | 9,3 g |
| diethylene glycol dimethyl ether | 4,2 g |

The resulting aqueous coating composition had a solids content of 43,8% by weight and was applied and cured in the same way as in Example 14.
The properties of the coating obtained are given in Table II.

Example 17

Example 14 was repeated, except that use was made of the following ingredients and amounts:

| dispersion from Example 7 | 56,4 g |
|---|---|
| melamine resin I (90%) (see Ex. 9) | 5,6 g |
| melamine resin II (see Ex. 10) | 3,3 g |
| diethylene glycol dimethyl ether | 3,5 g |
| dimineralized water | 4,0 g |

The resulting aqueous coating composition had a solids content of 45,8% by weight and was applied and cured in the same way as in Example 14. The properties of the coating obtained are given in Table II.

Example 18

Example 14 was repeated, except that use was made of the following ingredients and amounts:

| dispersion from Example 8 | 62,5 g |
|---|---|
| melamine resin I (90%) (see Ex. 9) | 5,6 g |
| melamine resin II (see Ex. 10) | 3,3 g |
| diethylene glycol dimethyl ether | 4,5 g |

The resulting aqueous coating composition had a solids content of 43,9 g by weight and was applied and cured in the same way as in Example 14.

The properties of the coating obtained are given in Table II.

Example 19

A) Preparation of polyurethane

Step I

Step I of Example 1A was repeated, except that use was made of the following ingredients and amounts:

| dimethylol propionic acid | 32,24 g |
|---|---|
| isophorone diisocyanate | 99,21 g |
| 2-hydroxyethyl methacrylate | 8,94 g |
| methyl methacrylate | 52,21 g |
| diethylene glycol dimethyl ether | 72,5 g |
| hydroquinone | 15,7 mg |
| dibutyl tin diacetate | 250 mg |

On conclusion of the reaction 55,0 g of butyl acrylate were added to the contents of the reaction flask, and the whole was homogeneously mixed.

Step II

Step II of Example 1A was repeated, except that use was made of the following ingredients and amounts.

Weighed into the reaction flask were:

18

| Cardura E-isophthalate | 169,0 g |
|---|---|
| butyl acrylate | 139,84 g |
| hydroquinone | 57 mg |
| dibutyl tin diacetate | 400 mg |

The Candura E-isophthalate polyester was prepared from a monoepoxy compound (available under the trademark Cardura E-10 from Shell) and isophthalic acid and had an OH number of 165,7 and an acid number of 0,4 mg KOH/g. This polyester will be referred to hereinafter as Cardura E-isophthalate.

The dropping funnel was filled with 291 g of the reaction mixture from Step I, which was reacted with the contents of the reaction flask. The resulting functionalized polyurethane reaction product obtained had an Mn, as measured by GPC, of about 1700 with an Mw of about 2830, resulting in a polydispersity index (PDI) of about 1,67. (The calculated Mn was about 2400).

On conclusion of the above reaction, the following components were fed into the reaction flask:

| 2-hydroxyethyl methacrylate | 59,33 g |
|---|---|
| N,N-dimethyl ethanolamine | 19,50 g |

## B) Emulsion polymerization

Example 1B was repeated, except that use was made of the following ingredients and amounts. Into the reaction flask was weighed:

| demineralized water | 661,08 g |
|---|---|

Dropping funnel A was filled with 640,60 g of the reaction mixture from Example 19A, and dropping funnel B with a homogeneous mixture of

| demineralized water | 100,0 g |
|---|---|
| and ammonium persulphate | 1,12 g |

Obtained was a stable aqueous polymer dispersion, the properties of which are given in Table I.

## Example 20

### A) Preparation af polyurethane

### Step I

Step I of Example 1A was repeated, except that use was made of the following ingredients and amounts:

| dimethylol propionic acid | 32,24 g |
|---|---|
| isophorone diisocyanate | 99,21 g |
| 2-hydroxyethyl methacrylate | 8,94 g |
| methyl methacrylate | 65,26 g |
| diethylene glycol dimethyl ether | 72,5 g |
| hydroquinone | 19,5 mg |
| dibutyl tin diacetate | 250 mg |

On conclusion of the reaction 55,0 g of butyl acrylate were added to the contents of the reaction flask, and the whole was homogeneously mixed.

Step II

Step II of Example 1A was repeated, except that use was made of the following ingredients and amounts.
Weighed into the reaction flask were:

| Cardura E-isophthalate | 169,0 g |
|---|---|
| butyl acrylate | 142,81 g |
| hydroquinone | 57 mg |
| dibutyl tin diacetate | 400 mg |

The dropping funnel was filled with 302,86 g of the reaction mixture from Step I, which was reacted with the contents of the reaction flask. The resulting functionalized polyurethane reaction product Mn as measured by GPC was about 1700 with an Mw of about 2830, resulting in a polydispersity index of about 1,67. (The caLculated Mn was about 2400).
On conclusion of the above reaction the following components were fed into the reaction flask:

| 2-hydroxyethyl methacrylate | 44,50 g |
|---|---|
| N,N-dimethyl ethanolamine | 19,50 g |

B) Emulsion polymerization

Example 1B was repeated, except that use was made of the following ingredients and amounts.
Into the reaction flask is weighed:

| demineralized water | 661,08 g |
|---|---|

Dropping funnel A was filled with 640.60 g of the reaction mixture from Example 19A and dropping funnel B with a homogeneous mixture of:

| demineralized water | 100,0 g |
|---|---|
| and ammonium persulphate | 1,12 g |

20

Obtained was a stable aqueous polymer dispersion, the properties of which are given in Table I.

Example 21

Example 14 was repeated, except that use was made of the following ingredients and amounts:

| dispersion from Example 13 | 75,0 g |
| melamine resin I (90%) (see Ex. 9) | 5,56 g |
| butoxyethanol | 5,0 g |
| demineralized water | 12,0 g |

The resulting aqueous coating composition had a solids content of 38,8 by weight and was applied and cured in the same way as in Example 14. The properties of the coating obtained are given in Table II.

Example 22

Example 14 was repeated, except that use was made of the following ingredients and amounts:

| dispersion from Example 20 | 75,0 g |
| melamine resin I (90%) (see Ex. 9) | 5,56 g |
| butoxyethanol | 5,0 g |
| demineralized water | 12,0 g |

The resulting coating composition had a solids content of 38,8 by weight and was applied and cured in the same way as in Example 14. The properties of the coating obtained are given in Table II.

Table I

| Properties of the aqueous polymer dispersions | | | | |
|---|---|---|---|---|
| Dispersion acc. to | Solids content | Viscosity (cPa. sec) | pH | Mean particle size (NM) |
| 1 | 40,0 | 6,6 | 7,43 | 89 |
| 2 | 40,0 | 8,0 | 7,42 | 93 |
| 3 | 40,0 | 7,3 | 7,45 | 108 |
| 4 | 40,0 | 9,0 | 7,66 | 76 |
| 5 | 40,0 | 10,4 | 7,64 | 76 |
| 6 | 40,0 | 9,6 | 7,56 | 73 |
| 7 | 44,3 | 15,0 | 7,32 | 146 |
| 8 | 40,0 | 2,8 | 7,57 | 82 |
| 19 | 40,0 | 16,0 | 7,71 | 109 |
| 20 | 40,0 | 9,0 | 7,70 | 112 |

| Properties of the coatings | | | | | | |
|---|---|---|---|---|---|---|
| Coating from Example | Film thickness (μm) | Persoz hardness (sec.) | Ball impact test (kg/cm) | | Erichsen indentation test (mm) | Gloss (60°C) |
| | | | coated side | back side | | |
| 9 | 41 | 189 | > 85 | 69 | 8,4 | 78 |
| 10 | 40 | 198 | > 85 | 55 | 7,8 | 79 |
| 11 | 40 | 200 | 83 | 62 | 8,0 | 78 |
| 12 | 42 | 210 | 78 | 48 | 7,5 | 79 |
| 13 | 40 | 218 | 76 | 48 | 7,4 | 78 |
| 14 | 43 | 215 | > 85 | > 85 | 9,0 | 85 |
| 15 | 48 | 208 | > 85 | > 85 | 8,7 | 92 |
| 16 | 42 | 218 | > 85 | > 85 | 9,0 | 90 |
| 17 | 47 | 162 | > 85 | > 85 | 8,8 | 80 |
| 18 | 39 | 135 | > 85 | > 85 | 9,0 | 90 |
| 21 | 37 | 260 | 80 | 16 | 7,7 | 87 |
| 22 | 34 | 225 | 78 | 46 | 7,8 | 87 |

Many modifications and variations, based on the preferred embodiments specifically disclosed herein can be made in the compositions and methods described herein without substantially departing from the concept of the present invention. Accordingly it is intended that such modifications and variations are included within the scope of the present invention as defined in the claims which follow.

## Claims

1. A method of preparing a composition which can be used to emulsion polymerize a polymer hybrid comprising polyurethane and polyacrylate, which polymerized composition can be used in an aqueous dispersion, characterized in that the method comprises the steps of:
   (a) preparing a prepolymer by reacting an excess of polyisocyanate with an organic compound having at least one hydroxyl group and at least one acid group;
   (b) reacting the prepolymer of step (a) with a polyol to form a functionalized polyurethane; and
   (c) providing sufficient acrylate monomer, methacrylate monomer or mixtures thereof as a solvent that a composition results wherein functionalized polyurethane makes up from about 10% by weight to about 70% by weight of the combination of functionalized polyurethane and acrylate monomer, methacrylate monomer or mixtures thereof.

2. The method according to claim 1, characterized in that steps (a) and (b) are carried out in acrylate or methacrylate monomer, at least a portion of which serves as the solvent of step (c).

3. The method according to either Claim 1 or Claim 2, characterized in that said acid group is a carboxyl group.

4. The method according to Claim 1, characterized in that a functionalized acrylate or functionalized methacrylate monomer comprises at least a portion of said monomer solvent of step (c)

5. The method according to Claim 2, characterized in that a functionalized acrylate or functionalized . methacrylate monomer which is not present in steps (a) and (b), comprises at least a portion of said monomer solvent of step (c).

6. The method according to any one of Claim 1, Claim 2, Claim 4 or Claim 5, characterized in that said polyol is selected from the group consisting of polyethers, polyesters and mixtures thereof, said polyol having an average molecular weight ranging from about 200 to about 6000, an OH number ranging from about 20 to about 600 mg KOH/g, and an acid number below about 10 mg KOH/g.

7. The method according to Claim 6, characterized in that said polyol has an average hydroxy functionality of two.

8. The method according to Claim 6, characterized in that said step (a) prepolymer contains ethylenic unsaturation.

9. The method according to Claim 6, characterized in that at least some vinyl monomer having a group capable of reacting with said isocyanate group is added during step (a) or step (b).

10. The method according to Claim 8, characterized in that said acid groups present on said functionalized polyurethane are neutralized at least in part.

11. The method according to Claim 9, characterized in that said acid groups which are present on said functionalized polyurethane are neutralized at least in part.

12. The method according to Claim 10, characterized in that said step (a) prepolymer is the reaction product of isophorone diisocyanate and dimethyl propionic acid.

13. The method according to Claim 11, characterized in that said step (a) prepolymer is the reaction product of isophorone diisocyanate and dimethyl propionic acid.

14. A composition for use in the emulsion polymerization of a polymer hybrid comprising polyurethane and polyacrylate, characterized in that the composition comprises:

(a) the reaction product of:

(i) a prepolymer prepared by reacting an excess of polyisocyanate with an organic compound having at least one hydroxyl group and at least one acid group; with

(ii) a polyol, and

(b) an acrylate monomer, a methacrylate monomer, or mixtures thereof, wherein the weight % of (a) ranges from about 10% by weight to about 70% by weight of the combination of (a) and (b).

15. The composition according to Claim 14, characterized in that said acid group is a carboxyl group.

16. The composition according to Claim 14, characterized in that at least a portion of said acrylate monomer, methacrylate monomer or mixture thereof comprises a hydroxy functionalized acrylate monomer, hydroxy functionalized methacrylate monomer or combinations thereof, which functionalized monomer was added subsequent to the formation of the reaction product of step (a).

17. The composition according to Claim 14, characterized in that said step (a) prepolymer contains ethylenic unsaturation.

18. The composition according to Claim 14, characterized in that at least some vinyl monomer having a group capable of reacting with said isocyanate group is added in step (a) or in step (b).

19. The composition according to claim 14, characterized in that said polyol is selected from the group consisting of polyethers, polyesters and mixtures thereof, said polyol having an average molecular weight ranging from about 200 to about 6000, an OH number ranging from about 20 to about 600 mg KOH/g, and an acid number below about 10 mg KOH/g.

20. The composition according to Claim 19, characterized in that said polyol has an average hydroxy functionality of two.

21. The composition according to any one of the Claims 14-20, characterized in that at least a portion of said groups which are present on the reaction product of said prepolymer and said polyol are neutralized.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 167 188 (POLYVINYL CHEMIE) <br> * Page 2, line 21 - page 9, line 20; examples 4-7; claims 1,4,13,14,16,25 * <br> --- | 1-21 | C 08 G 18/08 <br> C 08 G 18/67 <br> C 08 F 299/06 |
| X | EP-A-0 098 752 (RESEM) <br> * Page 4, line 23 - page 13, line 9; claims 1,2 * <br> --- | 1-21 | |
| D,X | EP-A-0 189 945 (WITCO) <br> * Page 3, line 6 - page 13, line 30; claims 1,3,5-9 * <br> --- | 1-21 | |
| A | FR-A-2 402 672 (BAYER) <br> * Page 2, line 31 - page 9, line 28; claims 1-9 * <br> ----- | 1-21 | |
| | | | TECHNICAL FIELDS SEARCHED (Int. Cl.5) <br><br> C 08 F <br> C 08 G |

The present search report has been drawn up for all claims

| Place of search | Date of completion of the search | Examiner |
|---|---|---|
| THE HAGUE | 16-11-1989 | BOURGONJE A.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P0401)